# EUROPEAN PATENT SPECIFICATION

(11) **EP 0 326 045 B1**
(45) Date of publication and mention of the grant of the patent: **19.10.1994**
(21) Application number: 89101021.7
(22) Date of filing: 20.01.1989
(51) Int. Cl.: A01M 7/00

(54) **A field spraying device**
Feldspritze
Pulvérisateur de champs

(30) Priority: 25.01.1988 DK 336/88
(43) Date of publication of application: 02.08.1989
(73) Proprietor: HARDI INTERNATIONAL A/S, 2630 Taastrup (DK)
(72) Inventor: Alsing, Erik, DK-2990 Niva (DK)
(74) Representative: Sajda, Wolf E., Dipl.-Phys.

(56) References cited:
- EP-A- 0 272 740
- EP-A- 0 278 926
- FR-A- 1 564 543
- US-A- 3 472 454
- US-A- 4 274 589
- AGRICULTURAL MACHINERY JOURNAL. vol. 41, no. 2, February 1, 1987, LONDON GB page 28; 'AIRING SOME OPTIONS '

## Description

The invention relates to a spraying device comprising an elongated spray beam with a plurality of spray nozzles provided along the elongated spray beam.

Such spraying devices are used, for example, in the field of agriculture in order to spray various materials onto a field or crop to be treated. In conventional spraying devices, the spray beams are often encumbered with the drawback that they must be located relatively far from the crop so as to achieve a substantially uniform discharging of the spraying material. A consequence thereof is an increased risk of undesired wind movement.

The document EP-A-0 272 740 (state of the art under Article 54(3) EPC) discloses a spray device comprising a frame having attached thereto at least one spray boom provided with spraying means which can be coupled via lines to a reservoir for a spraying agent. Means are provided for generating via at least one air outlet an air flow which acts together with a spraying agent flow generated by the spraying means via at least one spray nozzle. The air flow means comprise a flexible hose intended for pressurized air, which flexible hose forms a connection with an air inlet onto a compressor, and it also comprises guiding means connecting onto the air outlet so that the air flow can be guided relative to the spraying agent flow and/or the crop for spraying.

In this conventional spray device, it is essential that guide plates are attached for pivoting via hinges. Means are provided in order to adjust the relative angular position of the guide plates for example by means of cylinders so that the position of both guide plates can be set and/or re-adjusted.

The document EP-A-0 278 926 (state of the art according to Article 54(3) EPC) discloses a foldable spray boom for air atomization of chemical products on crop fields. In this conventional construction, a spray boom which is to be mounted on an agricultural machine provided with an atomizer unit comprises a pair of pipes, preferably of soft textile material, supported on a metal structure and connected to the blowers of the atomizer unit, which convey an air flow to a plurality of atomizers which are fed with the product by a conduit which is also supported by the metal structure.

In this conventional spraying device, a foldable spray boom comprises pipes which may consist of a soft textile material and which are supported by collars which are made of a moderately deformable material connected to rods of a foldable section. From the pipes, diffusers of the atomizers are branched off in correspondence with the collars. In this conventional construction, it is essential that the respective diffusers are made integral with a fitting open to the interior of the pipe and secured by means of a threaded ring to both the wall of the pipe and the collar which are provided with suitable holes. So, this conventional construction discloses a plurality of locally distributed separate diffusers which are spaced-apart from each other.

A publication in the periodical AGRICULTURAL MACHINERY JOURNAL, Vol. 41, No. 2, February 1987, London GB, page 28, et seq. "AIRING SOME OPTIONS", relates in general to a spraying device without describing in detail the construction and function of the spraying device in total. Some details relate to a nozzle wherein compressed air is induced and mixed with a spray liquid in a swirl chamber, and then the atomized material is sprayed out. In this conventional construction, no separate air outlets are provided through which compressed air could be blown out in order to be used as a shielding carpet for the spraying agent.

The object underlying the present invention is to provide a spraying device which ensures a reliable spraying function wherein the disturbing influence of wind is avoided or at least considerably decreased.

For this purpose, the invention provides a spraying device, comprising an elongated spray beam with a plurality of spray nozzles provided along the elongated spray beam, and further comprising an at least partially inflatable hose of resilient material connectable to a compressed-air source, the hose comprising one or more slot-shaped discharge openings extending in the longitudinal direction of the hose, wherein the slot-shaped discharge openings are formed by means of rigid plate members which are fixed relative to each other, and wherein the rigid plate members forming the slot-shaped discharge openings are pivotally mounted relative to the spray nozzles and to the hose which is substantially fixedly mounted.

A further development of the spraying device according to the invention is characterized in that the rigid plate members forming the slot-shaped discharge openings are mounted on a pipe and can be turned about the pipe in order to alter the angular position thereof with respect to the pipe supporting a plurality of spray nozzles.

In a specific embodiment of the spraying device according to the invention, the angular position of the pipe is controlled by a hydraulic cylinder connected to a rod projecting from the turnable pipe.

One specific embodiment of the spraying device according to the invention is characterized in that the nozzles are fixed relative to the slot-shaped discharge openings.

Another specific embodiment of the spraying device according to the invention is characterized in that the nozzles are turnable relative to the slot-shaped discharge openings.

A further development of the spraying device according to the invention is characterized in that the hose is formed by a plastic tarpaulin and in that a rope is welded into each side of the tarpaulin in such a manner that two ropes can be inserted into grooves and retained therein for positioning the hose appropriately.

According to the invention, it is achieved in an advantageous manner that the spraying direction can be changed as desired without having the necessity that the whole hose must be turned. Rather, the slot-shaped discharge openings formed by the rigid plate members can be brought into a suitable angular position with respect to the spray beams which are output from the respective nozzles. So, the use of the spraying device according to the invention results in a very uniform discharging of the spraying material, wherein the spray beam can be located close to the ground and the crop, respectively. Consequently, the influence of the wind can be reduced considerably.

Also, according to the invention, the slot-shaped discharge openings may be pivotally mounted by utilizing the feature that the inflatable hose is made of a resilient material. In other words, the invention utilizes the feature that the resilient top portion allows a turning movement in such a manner that the discharging direction can be adjusted. Moreover, it is possible to take the wind velocity, the velocity of the vehicle etc. into account. In other words it is possible to improve the utilization of the sprayed materials simultaneously with taking optimum care of the crop.

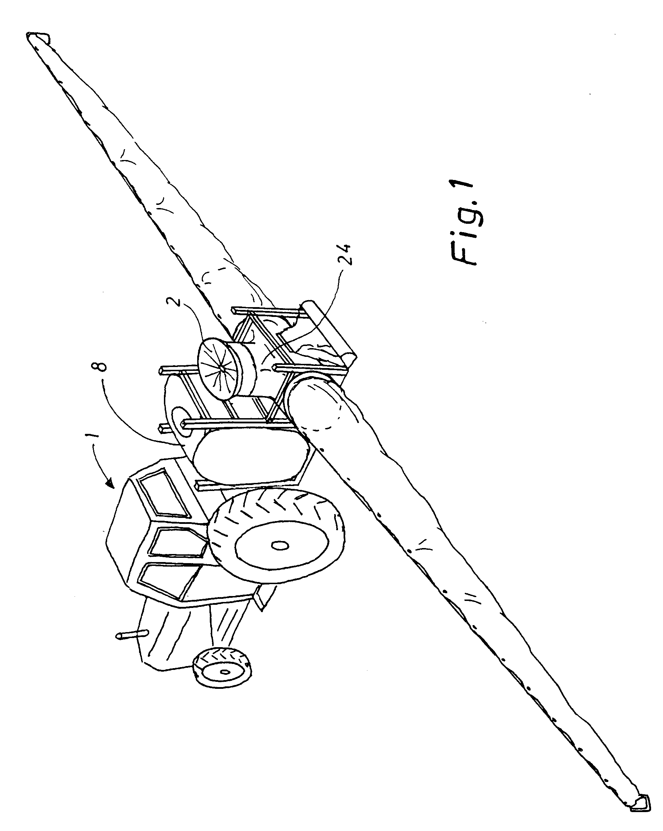

The invention is described in greater detail below with reference to the accompanying drawing, in which
Figure 1 illustrates a field spraying device according to the invention,

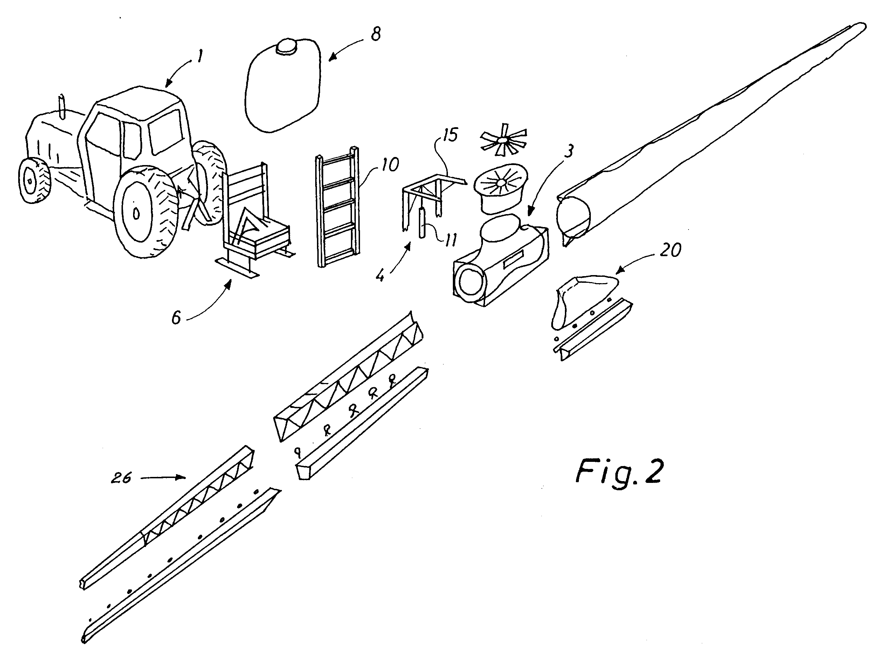

Figure 2 is an exploded view of the spraying device of Figure 1,
Figure 3 illustrates the frame of Figure 2 on a larger scale,
Figure 4 illustrates a portion of the beam on a larger scale, and
Figure 5 illustrates the inflatable hose with the longitudinal slot together with the nozzles for the liquid to be sprayed.

As the crops differ it is necessary to have a possibility of treating the plants in such a manner that the highest amount of liquid from the air flow comes into contact with the plants. In connection with sturdy, upright crops the spraying material must come into contact with the ground, and consequently the latter requires an air flow along the growing direction of the plants in order to ensure a maximum depositing of the spraying liquid.

Thin, short crops come often into contact with a high amount of spraying liquid when the air-liquid flow follows a maximum distance from the top to the bottom of the plant to be sprayed. Weed control on ground without crops or with short crops at an early stage of the growth thereof also requires a rearward discharging or discharging at a predetermined angle of the air-liquid mixture. The air and the liquid cause the small plants to move in such a manner that both the bottom and the top side of the blades come into contact with the air-liquid flow. In addition it is of extreme importance that it is possible to spray along the inclination of the crop, because then it is possible to come into contact with and to deposit the liquid on the ground.

The spraying is more or less sensitive to wind, especially when small nozzles and high pressures are involved. Usually large nozzles or low pressures are recommended in connection with sprayings where the velocity of the surrounding wind is higher than 4-6 m/s because the drop size is thereby increased. The latter is substantially caused by large drops possessing a higher energy than small drops. Accordingly, the large drops have a substantially better chance of coming into contact with the article to be sprayed. The air-liquid system has the effect that even the small wind-sensitive drops are fed with part of the energy of the controlled air flow, which prevents the surrounding air from removing the drops from the article to be sprayed.

The system allows a spraying by means of small nozzles spraying only small amounts of liquid even at wind velocities exceeding 6 m/s . As a result the capacity is higher than previously known.

A movable slot system allows a spraying against the wind irrespective of the fact whether the vehicle follows the direction of the wind or not.

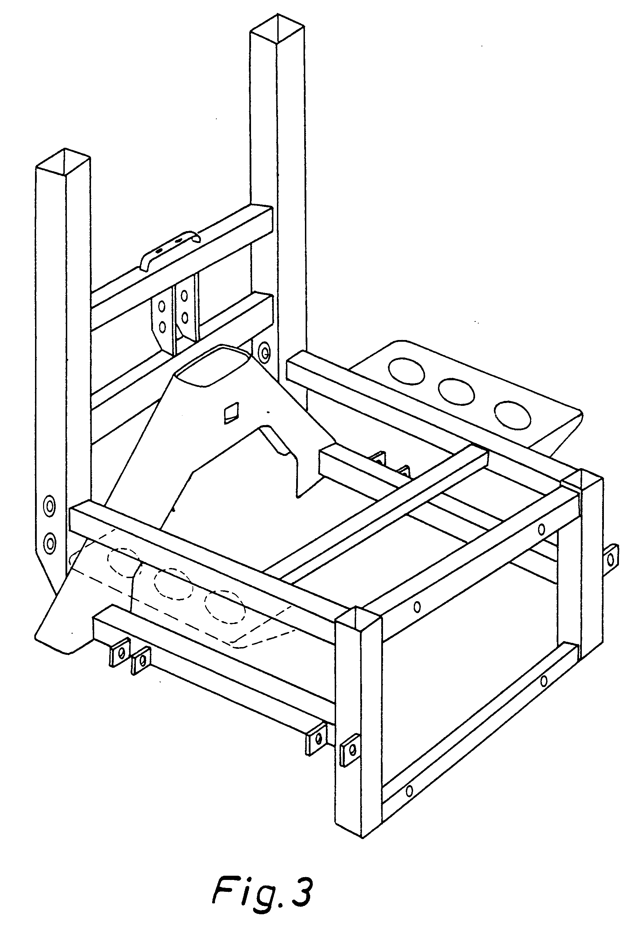

The spraying device according to the invention provides an artificial wind which is utilized for stirring up the crop in such a manner that the spraying liquid can come into contact with the ground. A blower 2 (an axial blower) is used, and it is mounted on a centrally situated lift vehicle 4 on the spraying device in such a manner that the blower 2 follows a spray beam 26 up and down. A tractor 1 carries the entire spraying device in a conventional three-point suspension. The spraying device comprises a frame 6 and a container 8 with the spraying liquid. The frame 6 is made of square steel pipes, cf. Figure 3. Two vertical side members 10 are secured to the frame 6, the lift vehicle 4 driving up and down the side members 10 by means of a hydraulic cylinder 11. The lift vehicle 4 is furthermore provided with a projecting fork 15 supporting the spray beam 26. As a result the entire spray beam 26 can be moved up and down, which allows a variation of the height above the ground between 300 and 1900 mm. The spray beam 26 can be bent at two or more points in such a manner that it can be turned towards the container 8 and the tractor 1. The spray beam 26 is provided with spray nozzles 12 at regular intervals of approximately 0,5 m. The spray nozzles 12 communicate with a liquid distributor pipe 17. The nozzles 12 and the air blown out of an elongated slot 13 must follow one another if the direction is varied. The continuous slot 13 is provided at the bottom of the spray beam 26, said slot 13 only being interrupted at the bending points of the beam 26. The slot 13 is situated on a pipe 14 and can be turned about said pipe 14 in order to alter the angular position depending on whether it should be directed slightly forward or backward. The angular position of the pipe 14 is controlled by a hydraulic cylinder 16, one end of which is connected to a rod 14a projecting from the turnable pipe 14, and the opposite end of which is connected to the central beam 26a. Hydraulic hoses (not shown) are connected to the hydraulic cylinders 16. The pipe 14 is furthermore provided with several fittings supporting the spray nozzles 12 in such a manner that the liquid is sprayed into the air flow approximately 200-300 mm below the nozzle openings with the effect that the liquid drops sprayed out do not just flow away. The slot 13 is preferably formed by means of rigid plastic members. The plastic members are shaped in such a manner that the rim of a flexible tarpaulin 18 can be pulled into two grooves and retained therein. The tarpaulin 18 is made of plastics, where a rope is welded into each side, for instance in such a manner that the two ropes can be inserted in the grooves and retained therein. The tarpaulin 18 is of a varying width and forms a elongated bag and is for instance made of DACRON® (polyester canvas), PVC or polyethylene. A pipe of a diameter of approximately 100 mm at the end is provided. The diameter increases towards the center, and at the blower 2 it is about 500 mm. As a result, a uniform distribution of the air along the slot 13 is obtained. An air "carpet" must exist along the entire slot 13 and in the same direction. The axial blower 2 with a vertical axis is situated at the center next to a T-shaped distributor pipe 3 of polyethylene distributing the air to the two channels formed by the elongated bags. The blower 2 is hydraulicly driven in such a manner that it is possible to vary the velocity of the air from the slot from 0 to 30 m/s .

At the innermost 2 m the air is removed through the side of the T-shaped member 3, a separate bag 20 being situated at said member 3.

Each beam section is connected with a hose (not shown) feeding the liquid to be sprayed, said hose being connected to the distributor pipe 17. The hydraulic cylinders turning the beam sections are connected to hydraulic hoses (not shown). The hydraulic hoses are fed by a hydraulic pump (not shown) and driven by the power output of the tractor. The hydraulic pump also feeds a hydraulic motor driving the axial blower 2. The blower 2 discharges about 1500 m³ per h per m of beam. As stated previously, a plurality of hydraulic cylinders 16 are furthermore situated along the spray beam 26 for the adjustment of the direction of the spray nozzles 12 and the air slot 13, respectively.

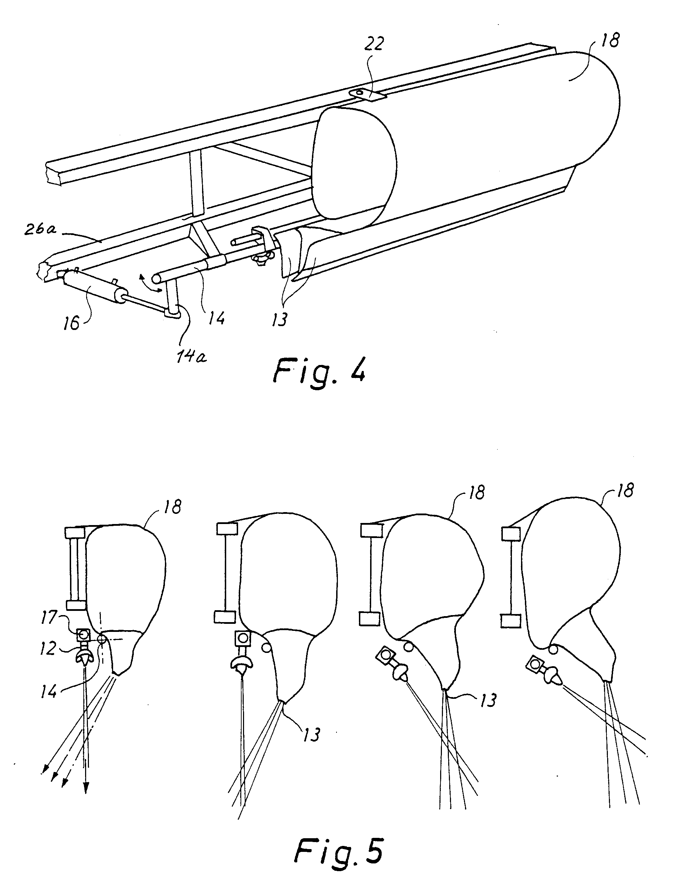

At the top, the bag 18 is secured to the spray beam 26 by means of a number of fittings 22, cf. Figure 4.

The spray beam 26 is suspended in a trapezoidal beam system at 24, cf. FR-A-1564543. Springs are furthermore provided which absorb possible shocks during the driving.

The invention thus provides a spraying device which is more flexible than previously known devices, and which improves the utilization of the materials sprayed out simultaneously with taking optimum care of the crop.

## Claims

1. A spraying device, comprising an elongated spray beam (26) with a plurality of spray nozzles (12) provided along the elongated spray beam (26), and further comprising an at least partially inflatable hose (18) of resilient material connectable to a compressed-air source (2), the hose (18) comprising one or more slot-shaped discharge openings (13) extending in the longitudinal direction of the hose (18),
wherein the slot-shaped discharge openings (13) are formed by means of rigid plate members which are fixed relative to each other,
and wherein the rigid plate members forming the slot-shaped discharge openings (13) are pivotally mounted relative to the spray nozzles (12) and to the hose (18) which is substantially fixedly mounted.

2. The spraying device according to claim 1,
characterized in that the rigid plate members forming the slot-shaped discharge openings (13) are mounted on a pipe (14) and can be turned about the pipe (14) in order to alter the angular position thereof with respect to the pipe (14) supporting a plurality of spray nozzles (12).

3. The spraying device according to claim 2,
characterized in that the angular position of the pipe (14) is controlled by a hydraulic cylinder (16) connected to a rod (14a) projecting from the turnable pipe (14).

4. The spraying device according to any of claim 1 to 3,
characterized in that the nozzles (12) are fixed relative to the slot-shaped discharge openings (13).

5. The spraying device according to any of claims 1 to 3,
characterized in that the nozzles (12) are turnable relative to the slot-shaped discharge openings (13).

6. The spraying device according to any of claims 1 to 5,
characterized in that the hose (18) is formed by a plastic tarpaulin and in that a rope is welded into each side of the tarpaulin in such a manner that two ropes can be inserted into grooves and retained therein for positioning the hose (18) appropriately.

## Patentansprüche

1. Sprühvorrichtung, umfassend einen langgestreckten Sprühausleger (26) mit einer Vielzahl von Sprühdüsen (12) entlang des langgestreckten Sprühauslegers (26) und weiter umfassend einen zumindest teilweise aufblasbaren Schlauch (18) aus elastischem Material, der an eine Druckluftquelle (2) anschließbar ist, wobei der Schlauch (18) eine oder mehrere schlitzförmige Auslaßöffnungen (13) umfaßt, die sich in der Längsrichtung des Schlauches (18) erstrecken,
wobei die schlitzförmigen Auslaßöffnungen (13) durch steife Plattenelemente gebildet sind, die relativ zueinander befestigt sind,
und wobei die steifen Plattenelemente, welche die schlitzförmigen Auslaßöffnungen (13) bilden, drehbar relativ zu den Sprühdüsen (12) und zu dem Schlauch (18) angebracht sind, der im wesentlichen fest angebracht ist.

2. Sprühvorrichtung nach Anspruch 1,
**dadurch gekennzeichnet**,
daß die steifen Plattenelemente, welche die schlitzförmigen Auslaßöffnungen (13) bilden, an einem Rohr (14) befestigt sind und um das Rohr (14) herumgeschwenkt werden können, um ihre Winkelstellung in Bezug auf das Rohr (14) zu verändern, welches eine Vielzahl von Sprühdüsen (12) trägt.

3. Sprühvorrichtung nach Anspruch 2,
**dadurch gekennzeichnet**,
daß die Winkelstellung des Rohrs (14) durch einen hydraulischen Zylinder (16) gesteuert wird, der mit einer Stange (14a) verbunden ist, welche von dem drehbaren Rohr (14) vorsteht.

4. Sprühvorrichtung nach einem der Ansprüche 1 bis 3,
**dadurch gekennzeichnet**,
daß die Düsen (12) relativ zu den schlitzförmigen Auslaßöffnungen (13) fest angeordnet sind.

5. Sprühvorrichtung nach einem der Ansprüche 1 bis 3,
**dadurch gekennzeichnet**,
daS die Düsen (12) relativ zu den schlitzförmigen Auslaßöffnungen (13) drehbar sind.

6. Sprühvorrichtung nach einem der Ansprüche 1 bis 5,
**dadurch gekennzeichnet**,
daß der Schlauch (18) aus einer Kunststoffplane gebildet ist
und daß ein Seil in jede Seite der Kunststoffplane in der Weise eingeschweißt ist, daß zwei Seile in Nuten eingesetzt und darin gehalten werden können, um den Schlauch (18) in geeigneter Weise zu positionieren.

## Revendications

1. Dispositif de pulvérisation comprenant une rampe de pulvérisation (26) allongée pourvue d'une pluralité de buses de pulvérisation (12) prévues le long de la rampe de pulvérisation (26) allongée et comprenant, en outre, au moins un tuyau (18) partiellement gonflable, en matériau élastique, pouvant être relié à une source d'air comprimé (2), le tuyau (18) comprenant une ou plusieurs ouvertures d'évacuation (13) en forme de fente, s'étendant dans la direction longitudinale du tuyau (18),
dans lequel les ouvertures d'évacuation (13) en forme de fente sont formées au moyen d'organes rigides en forme de plaque, qui sont fixés les uns par rapport aux autres,
et dans lequel les organes rigides en forme de plaque, formant les ouvertures d'évacuation (13) en forme de fente, sont montés pivotants par rapport aux buses de pulvérisation (12) et au tuyau (18), qui est monté de façon pratiquement rigide.

2. Dispositif de pulvérisation selon la revendication 1, caractérisé en ce que les organes rigides en forme de plaque, formant les ouvertures d'évacuation (13) en forme de fente, sont montés sur un tuyau (14) et peuvent être tournés autour du tuyau (14), en vue de modifier leur position angulaire par rapport au tuyau (14) supportant une pluralité de buses de pulvérisation (12).

3. Dispositif de pulvérisation selon la revendication 2, caractérisé en ce que la position angulaire du tuyau (14) est commandée par un vérin hydraulique (16) relié à une tige (14a) faisant saillie du tuyau (14) rotatif.

4. Dispositif de pulvérisation selon l'une quelconque des revendications 1 à 3, caractérisé en ce que les buses (12) sont montées fixes par rapport aux ouvertures d'évacuation (13) en forme de fente.

5. Dispositif de pulvérisation selon l'une quelconque des revendications 1 à 3, caractérisé en ce que les buses (12) peuvent être tournées par rapport aux ouvertures d'évacuation (13) en forme de fente.

6. Dispositif de pulvérisation selon l'une quelconque des revendications 1 à 5, caractérisé en ce que le tuyau (18) est constitué d'un prélart en matière plastique et en ce qu'un câble est soudé de chaque côté du prélart, de manière que deux câbles puissent être insérés dans des gorges et y être maintenus en vue de positionner le tuyau (18) de manière appropriée.
